Europäisches Patentamt

(19) European Patent Office

Office européen des brevets

(11) EP 0 805 562 A2

(12) **EUROPEAN PATENT APPLICATION**

(43) Date of publication:
05.11.1997 Bulletin 1997/45

(51) Int. Cl.$^6$: **H04B 1/38**

(21) Application number: 97105780.7

(22) Date of filing: 08.04.1997

(84) Designated Contracting States:
**DE FR GB IT**

(30) Priority: **29.04.1996 US 639651**

(71) Applicant:
**Siemens Business Communication Systems, Inc.
Santa Clara, CA 95054 (US)**

(72) Inventors:
• **Berger, Stephen H.**
**Georgetown, Texas 78628 (US)**
• **Gilmore, Dillard**
**Austin, Texas 78727 (US)**

(74) Representative: **Fuchs, Franz-Josef, Dr.-Ing. et al
Postfach 22 13 17
80503 München (DE)**

(54) **Radio-frequency hearing aid protector for wireless communications products**

(57) A wireless communications device with low magnetic field emission is provided by disposing a magnetically absorptive material near the base of an antenna of a handset of the device. The magnetically absorptive material is preferably a ferrite-type metal oxide dispersed within a silicone rubber medium. The ferrite-type metal oxide acts to attenuate the magnetic field generated in the near field of the antenna. Interference with hearing aids worn by wireless communications device users is thereby reduced.

FIG. 2

EP 0 805 562 A2

## Description

### Field of the Invention

This invention relates to digital wireless communications products, for example cellular telephones.

### Background of the Invention

Cellular telephones and other digital wireless communications devices have revolutionized communications. However, users with hearing aids are often unable to use these devices because the radio-frequency (RF) signals used in wireless communications cause interference in the hearing aids. The interference can cause an annoying audible sound, such as a buzz, or can damage the hearing aid.

Hearing aids are electroacoustical devices worn to compensate for a hearing impairment by amplifying sound. They include aids placed behind the ear (BTE) and aids placed in the ear (ITE). Hearing aids generally consist of a microphone, an amplifier and a speaker, but are increasingly sophisticated instruments. Many have automatic gain control and digital signal processing; they can often be programmed to remedy a specific frequency loss related to the user's prescription. Hearing aids are particularly susceptible to problems with wireless devices because such a device is used immediately adjacent to the hearing aid.

One might try to focus the direction of the signal transmitted by the antenna to limit interference in the hearing aid. However, since a cellular telephone user does not know where the cell site will be, an omnidirectional antenna must be used, which means that a signal is continuously sent in the direction of the user's head.

One previous approach has been to fit hearing aids with special shells of plastic mixed with granulated iron. These special shells have caused overall input-related interference levels to increase, with results as much as 14-22 dB poorer than hearing aids of the same type using standard shells. Another approach has been to coat the hearing aid with an electromagnetically reflective material, such as silver paint; but again, results have been unsatisfactory. What is needed are wireless communications devices that can be used with a hearing aid with reduced interference.

### Summary of the Invention

In accordance with the present invention, a wireless communications device comprises an antenna that emits an electromagnetic field (EMF) signal for which a nominal frequency is defined. Magnetically absorptive material is placed within a distance from the base within one wavelength of the nominal frequency, excluding the 10° half cone with vertex at the base of the antenna that includes the antenna. The magnetically absorptive material attenuates the nominal frequency.

Also in accordance with the present invention, a wireless communications device comprises an antenna. The antenna emits an EMF signal for which a nominal frequency is defined. A reference plane is defined perpendicular to the antenna and through its base. Magnetically absorptive material is disposed on the opposite side of the reference plane from the antenna within a distance from the base of one wavelength of the nominal frequency.

Also in accordance with the present invention, magnetically absorptive material is disposed in a device that fits over a user's ear. When the user is exposed to a magnetic field such as that generated by a wireless communications device, the field is attenuated.

In an embodiment in accordance with the present invention, the magnetically absorptive material comprises a metal or combination of metals dispersed in a flexible medium. In one embodiment, the magnetically absorptive material consists of ferrite particles; ferrites are compounds typically containing a metal oxide such as iron oxide. In a preferred embodiment, the flexible medium is silicone rubber.

The invention also encompasses a method of providing a wireless communications device with low magnetic field emission. In a wireless communications device including an antenna as described above, the method comprises a step of disposing a magnetically absorptive material within a distance from the base of one wavelength of the nominal frequency excluding the 10° half cone with vertex at the base of the antenna that includes the antenna.

### Brief Description of the Drawings

FIG. 1A is a schematic drawing of a cellular telephone illustrating the placement of a sleeve including a magnetically absorptive material in accordance with an invention of the present application.

FIG. 1B is a schematic drawing of the cellular telephone of FIG. 1A illustrating a volume in which magnetically absorptive material is disposed.

FIG. 1C is a schematic drawing of the cellular telephone of FIG. 1A illustrating a hemispherical volume on the opposite side of a reference plane from the antenna.

FIG. 2 is a schematic drawing of a cellular telephone illustrating a magnetically absorptive earcup that has been cast directly onto the shell of the handset.

FIG. 3 is a schematic diagram of a cellular telephone such as that of FIGS. 1A or 2 in use by a person wearing a hearing aid.

FIG. 4 is a schematic diagram of a person wearing ear coverings incorporating a magnetically absorptive material.

### Description of the Preferred Embodiments

In accordance with the present invention, a wireless communications device comprises an antenna that emits an EMF signal with a frequency content for which a nominal frequency is defined. Magnetically absorptive material is placed within a distance from the base within one wavelength of the nominal frequency, excluding the 10° half cone with vertex at the base of the antenna that includes the antenna.

Also in accordance with the present invention, a wireless communications device comprises an antenna, which emits an EMF signal for which a nominal frequency is defined. A reference plane perpendicular to the antenna and through the base of the antenna is defined. Magnetically absorptive material is disposed on the opposite side of the reference plane from the antenna within a distance from the base of one wavelength of the nominal frequency.

In an embodiment in accordance with the present invention, the magnetically absorptive material comprises a metal or combination of metals dispersed in a flexible medium. In one embodiment, the magnetically absorptive material consists of ferrite particles; ferrites are compounds typically containing a metal oxide such as iron oxide. In a preferred embodiment, the flexible medium is silicone rubber.

In an embodiment in accordance with the present invention, the magnetically absorptive material is incorporated into a sleeve that fits over a cellular telephone or, alternatively, over the handset of a mobile telephone or other wireless communications device, with the magnetically absorptive material positioned in the area of the earcup, the region of the handset that fits nearest the user's ear. The magnetically absorptive material can be disposed in various configurations on the handset of the wireless communications device, or can be incorporated into the handset, either in a separate component inside the handset shell, or manufactured into the handset shell itself. The magnetically absorptive material can be positioned to create an "RF shadow" that significantly reduces EMF radiation reaching other areas of the user's head besides the ear.

The radio spectrum available for telecommunications use is limited. As channels become more tightly packed, the FCC and its counterparts in other countries have assigned new classes of service to higher frequencies. Cellular telephones are commonly assigned to a 900 MHZ or 1850-1930 MHZ range, or roughly 2 GHz. In time division multiple access (TDMA), one operation in common use for mobile phones, several radio channels use the same frequency band, but divide it in time. For example, the modulation can consist of a 100% amplitude-modulated 2 GHz radio frequency envelope with a repetition frequency of 217 Hz to enable multiple access. The 5 ms repetition window is carved up typically into 8 pieces, for 8 alternating channels. When a hearing aid user uses a cellular telephone, the RF 2 GHz signal, chopped by the phone at 217 Hz, is magnetically inducted by wiring and other components in the hearing aid, which act as antennas. When the induced current reaches an impedance, such as at the amplifier or the microphone of the hearing aid, it turns into a voltage. When the voltage crosses a nonlinear junction, such as one of the diodes in a transistor, the signal is demodulated; the separated, rectified signal then goes through the amplifier and comes out as sound. The 217 Hz square wave is heard as a buzzing.

The present approach to interference suppression began with the recognition that near-field conditions informed the problem. An electromagnetic field comprises a reactive near field, a near field, and a far field. The reactive near field is typically characterized as the region within $\lambda/2\pi$ from the radiation source; the near field may be characterized as within $\lambda/2$ of the source. The far field is beyond that. The characteristics of an electromagnetic field depend on whether it is in the reactive near field, the near field, or the far field. In particular, in the far field, the electric and magnetic fields combine to form a plane wave having an impedance of 377 $\Omega$, where impedance is E/H. However, in the reactive near field or the near field, the value of E/H is determined by characteristics of the source; furthermore, the electrical and magnetic fields must be considered separately. In most wireless communications devices, the applicable source is the antenna.

When a hearing aid wearer uses a wireless communications device such as a cellular telephone, the hearing aid and antenna are typically in close enough proximity that the hearing aid is within the near field of the antenna. Thus, many approaches to solving the problem of interference that might be applicable to the far field will not be effective. With most antennas used with wireless communications devices, as for example the quarter-wave dipole antenna typical of many cellular telephones, the magnetic field effects predominate and the magnetic field component is the primary coupling component.

Accordingly, one aspect of the present solution focuses on attenuating the magnetic field component (H) in the region near the wireless communications device. In a preferred embodiment, a magnetically absorptive material such as a ferrite is placed near the antenna generating the magnetic field. A material with relatively high permeability is used, where permeability ($\mu$) is defined as the quotient of the peak value of the flux density and the peak value of the applied field strength. Permeability is a complex parameter including a real component $\mu'$ that represents the reactive portion and the imaginary portion $\mu''$ that represents the magnetic loss factor.

Ferrites as a class tend to have relatively high permeability; their permeability is a function of EM frequency. Typically, as frequency increases, $\mu'$ of the material first remains constant, then rises to a maximum value, and finally falls off sharply, with loss component $\mu''$ rising to a peak as $\mu'$ falls. The losses are due to spin precession resonance. The relationship can be described by the following equation:

$$\int_{res} = \gamma M_{mat}/3\pi(\mu_i - 1)\,Hz$$

where

$\int_{res} =$   frequency at which the series loss component is maximum

$Y =$   gyromagnetic ratio $\sim 0.22 \times 10^6$ Am$^{-1}$

$\mu_i =$   initial permeability and

$M_{mat} \sim$   250-350 x $10^3$ Am$^{-1}$

With high frequencies such as those used in TDMA applications discussed above, a low-permeability ferrite material will maximize loss. Accordingly, the magnetically absorptive material is preferably a ferrite with a relatively low initial permeability to maximize loss in the high frequency range. With wireless communications devices using different frequencies, a ferrite material can be chosen with desired characteristics.

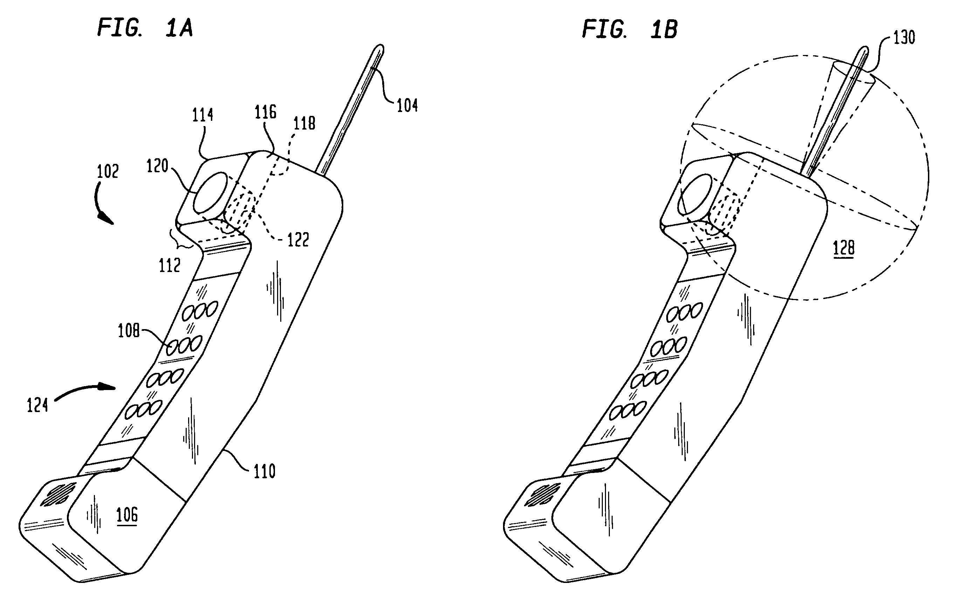

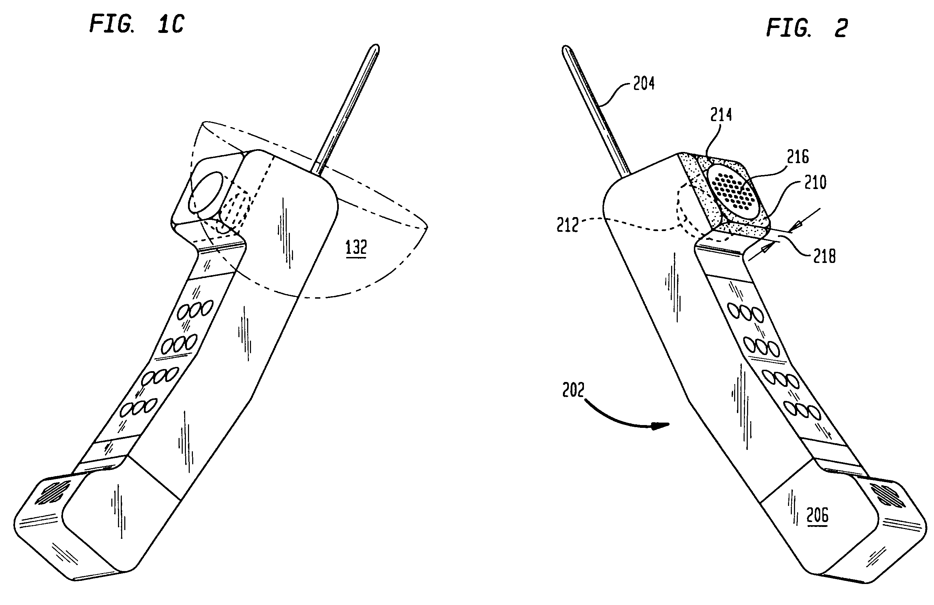

A cellular telephone 102 is shown in FIG. 1A. Cellular telephone 102 includes an antenna 104, a hard plastic shell 106, and a keypad 108. In operation, an RF signal is sent from cellular telephone 102 to a cell site, from which it is sent to a local office and switched to another cell site. Antenna 104 is thus a significant RF source. The signal from antenna 104 is typically omnidirectional.

Sleeve 110 fits over cellular telephone 102, with an elevated portion 112 defining a magnetically absorptive earcup 114. Magnetically absorptive earcup 114 is disposed over an original earcup 116. The elevation of original earcup 116 is shown by dashed lines 118.

The magnetically absorptive material is selected to optimize the field attenuation for the frequencies of interest according to the equation shown above. As discussed above, for some high frequency fields, a ferrite with low initial permeability is preferred.

Ferrites are metals, and thus can act as conductors or antennas. To solve this problem, they can be dispersed in a medium. Ceramic ferrite materials comprise particles of metal oxide of the general formula $MO.Fe_2O_3$ where M is chosen from metals such as nickel, zinc, manganese and cobalt disposed in a ceramic medium. The ceramic ferrites are compacted and sintered to align the metal oxide particles in order to create a smooth magnetic field. The ceramic ferrites then exhibit high volume resistivity and isotropic magnetic properties. However, ceramic ferrites are heavy, hard, and cold, and are relatively uncomfortable if placed directly against the ear, as they would be if a ceramic ferrite were simply disposed atop a telephone.

In a preferred embodiment, ferrites are disposed within a flexible medium, such as rubber. A flexible medium makes the magnetically absorptive material comfortable to use, because it conforms to the ear and feels warmer than ceramic. It is lighter than a metal- or ceramic-based magnetically absorptive material, and can be conformably affixed to a handset, for example, without gaps.

With a flexible medium, the alignment of the ferrite particles changes as the medium is deformed. However, unlike other uses of ferrites to attenuate EMF fields, such as interference suppression in transformers, the ferrite particles need not maintain a fixed alignment. It is believed that this is because other uses of ferrites require a material to deflect the field smoothly; here, disruption of the field, rather than smooth deflection, appears to be sufficient.

Sleeve 110 is preferably silicone rubber. Magnetically absorptive earcup 114 is preferably cast from ECCOSORB (a registered trademark of Emerson and Cuming, Inc.), a magnetically absorptive castable silicone rubber material manufactured by Emerson and Cuming, Inc., 869 Washington Street, Canton, MA 02021. ECCOSORB CR-S 124 is preferably used with devices in the 1800 MHZ range. ECCOSORB contains powdered iron particles of 60 mesh size dispersed in a silicone rubber medium, and is sold commercially to suppress current flow in the microwave frequency in highly controlled circumstances.

As is schematically shown in FIG. 1A, magnetically absorptive earcup 114 is positioned within sleeve 110 so that when sleeve 110 is in place on telephone 112, earcup 114 is over original earcup 116. Magnetically absorptive earcup 114 is preferably generally toroid shaped so as to provide an aperture 120 defining a passage from original hearing grill 122 to the user's ear. Preferably, elevation 112 is 1/4" to 2", so that magnetically absorptive earcup 114 extends above the original earcup of telephone 102. The earcup thickness is designed to provide the suppression needed to reduce the RF below the hearing aid immunity level. Accordingly, alternative dimensions of the earcup are provided for so that the earcup can be matched to antenna and hearing aid characteristics.

Magnetically absorptive earcup 114 is cast using the manufacturer's directions and is subsequently incorporated into silicone sleeve 106 that can be fit over telephone 102. Alternatively, the earcup 114 can be a horseshoe-shaped wedge, with the thickness of the material greatest at the curve and becoming thinner at the legs of the horseshoe. The thicker part fits near the top of the handset, with the thinner part at the bottom of the earcup.

Telephone shell 106 is a hard plastic shell that encloses the electrical components of the telephone. Silicone sleeve 110 fits around shell 106 but has an opening 124 that leaves keypad 108 uncovered for easy access.

Preferably, the magnetically absorptive material should be roughly within the near field of the source. As discussed above, the near field is approximately within $\lambda/2$. From the equation v = f$\lambda$, where v = 3 x $10^8$ m/sec and the frequency is roughly 2 GHZ, the wavelength is about 6"; the near field is within roughly three inches from the antenna. Although the example used in this discussion is 2 GHZ, the frequencies used in wireless communications devices vary a great deal, and the range of the near field will vary with frequency. Furthermore, although the near field can be described as being approximately within λ/2, its boundaries are not precisely defined and transition regions can vary. Accordingly, the volume swept out by a radius of about one wavelength of the antenna's nominal frequency, with the base of the antenna as the origin of the radius, can be considered to include the near field.

In a preferred embodiment, magnetically absorptive material in earcup 114 is disposed within a volume 128, as schematically depicted in FIG. 1B. Volume 128 is shown in dashed lines to signify that it is a defined region and not a physical component. Volume 128 is defined as the region within a distance from the base of the antenna of one wavelength of the nominal frequency of the antenna, excepting the 10° half cone 130 whose vertex is at the base of the antenna and that includes the antenna. Volume 128 is selected to include the near field of the antenna. Disposition of magnetically absorptive material within the defined volume can significantly reduce the magnetic field emission of the wireless device and thereby suppress interference with nearby electronic devices such as hearing aids.

Antennas typically work against ground planes that define the direction of travel of surface currents in associated electromagnetic fields. In the configuration of most wireless communications devices, the ground plane is roughly at the top of the handset, and the hearing aid or other matter to be protected from EMF radiation is on the opposite side of the ground plane from the antenna. Although the ground plane can shift its location, a reference plane can be defined perpendicular to the antenna and through its base; in an alternative embodiment, magnetically absorptive material is disposed on the opposite side of the reference plane from the antenna and within a distance of one wavelength of the nominal frequency of the antenna. In this alternative embodiment, magnetically absorptive material in earcup 114 is disposed within a hemisphere 132, as schematically depicted in FIG. 1C. Hemisphere 132 is shown in dashed lines to signify that it is a defined region and not a physical component.

Preferably, the hearing aid or other matter (including biological tissue) to be protected from the magnetic field lies on a central axis through the toroid of magnetically absorptive material. However, good experimental results have been achieved even where the toroid and hearing aid are one to one and a half inches off axis.

In an alternative embodiment, a toroid of ceramic ferrite material is disposed on (or alternatively, in) a cellular telephone near the earcup of the telephone. For user comfort, the ceramic ferrite is preferably covered with silicone rubber or other soft or flexible material before being placed on a handset, or is alternatively disposed within the shell of the handset.

FIG. 2 shows a cellular telephone 202 in which magnetically absorptive material is part of the telephone. Cellular telephone 202 includes an antenna 204, which is an RF source. A hard plastic shell 206 encloses electrical components of cellular telephone 202. Magnetically absorptive earcup 210 is preferably made of ECCOSORB (registered trademark), and contains magnetically absorptive particles dispersed in a silicone rubber. Preferably, magnetically absorptive earcup 210 is approximately 1/32" to 1/8" from speaker 212 within the telephone. (Speaker 212 is schematically shown in dashed lines with in the body of cellular telephone 202.) Earcup 210 is cast directly onto telephone shell 206 according to directions given in the Technical Data for ECCOSORB (revised 12-95), and is bonded into place using a suitable adhesive applied before casting. The Technical Data for ECCOSORB, published by Emerson and Cuming, Inc., rev. 12-95, is incorporated herein by reference in its entirety for all purposes. In an alternative embodiment, earcup 210 is manufactured separately and is then affixed to shell 206.

Earcup 210 is basically toroid shaped, including an aperture 214 into which a grill 216 fits. Grill 216 is preferably made of silicone rubber, for the user's comfort and to better conform to earcup 210; alternatively, it can be made of hard plastic or another material. Earcup 210 is placed preferably 1/16" away from speaker 222. The outside contour conforms to and extends the industrial design of the phone. The inside diameter and thickness are selected to give the desired attenuation to the RF signal.

In an alternative embodiment, a suitable ferrite is incorporated into hard plastic shell 206, so that the magnetically absorptive earcup is an integral part of shell 206. Alternatively, a toroid of magnetically absorptive material such as ECCOSORB can be placed in a first layer of integral earcup 210, or can be sandwiched between layers of other material such as silicone rubber or hard plastic. In a further alternative embodiment, the magnetically absorptive material is not cast but is constructed of sheets of prefabricated, flexible magnetically absorptive material, such as ECCOSORB MF-S, a high-loss silicone rubber dielectric manufactured by Emerson & Cuming, Inc.

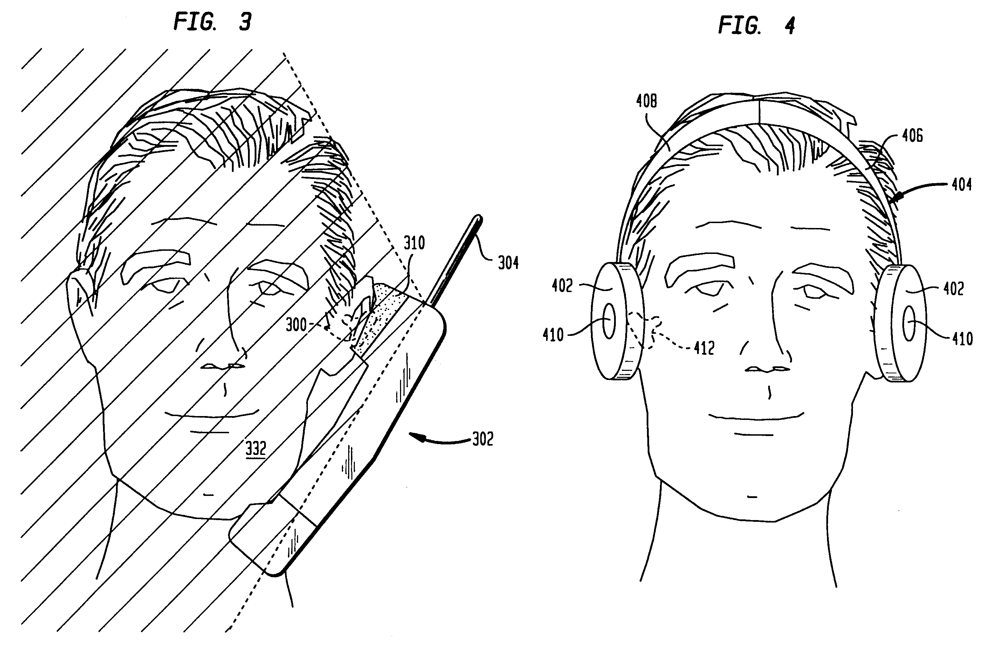

When a cellular telephone 302 is in use, a magnetically absorptive earcup 310 is positioned generally between an antenna 304 and in-the-ear (ITE) hearing aid 300, as schematically illustrated in FIG. 3. In this way an "RF shadow" area 332 is created. (Area 332 is depicted in dashed lines to illustrate that it is not a physical component.) Area 332 is any point reachable by a ray with vertex on the antenna passing through the absorptive material. Area 332 displays substantially reduction of electrical and magnetic fields emanating from antenna 304. Furthermore, magnetically absorptive earcup 310 may further disrupt the magnetic field outside area 332, providing a larger "RF shadow". An area of high degree of suppression can be defined as those points to which there is no ray with a vertex at any point on the antenna passing through the absorptive material.

Hearing aid 300 and much of the user's head are within area 332, as schematically depicted in FIG. 3. The configuration of magnetically absorptive earcup can be varied to achieve different dimensions of area 332. In addition, a shade of magnetically absorptive material can be added to telephone 302 to create a shadow of controlled extent. A layer of reflective material can be added to further shield area 332 from RF radiation. In this way, the human head or other parts of the body can be protected from electromagnetic, electrical, and magnetic fields generated by telephone 302, and interference with hearing aids or other electrical devices can be suppressed. It is contemplated that layering of magnetically absorptive material with reflective material or other material can lead to more precise control of area 332.

In an alternative embodiment, magnetically absorptive material is incorporated into ear coverings 402, as schematically depicted in FIG. 4. Ear coverings 402 are coupled to adjustable headpiece 404. Adjustable headpiece 404 includes two bands 406, 408. Band 406 is slightly wider than band 408, and slides over band 406 to fit the head size of the wearer. As is illustrated in FIG. 4, ear coverings 402 are generally annular shaped and fit on the wearer's ear, with a channel 410 providing communication with the wearer's ear. The general positioning of ear coverings 402 over an ITE hearing aid 412 is shown.

Ear coverings 402 allow the wearer to protect his hearing aid (or his head) from magnetic fields generated by communications devices. Ear coverings 402 also allow a wearer to move from one wireless device to another without transferring a sleeve or absorptive earpiece. Ear coverings 402 also provide protection from magnetic fields that are encountered incidentally, as for example in a situation where a hearing aid wearer is moving among several sources of RF, such as on the bridge of a submarine.

In alternative embodiments, only one earcup 402 can be used, or only one of two earcups can include magnetically absorptive material. Alternative configurations of ear coverings are provided for. A headpiece need not be used; the earcups may be cups that fit over the pinnae. Although channel 410 is shown in FIG. 4 to allow a wearer to hear, it should be pointed out that in many uses, it is desirable to suppress interference and to suppress noise. In such a case, the ear covering has no channel and is an integral covering of magnetically absorptive material. Alternatively, ear covering 402 can be a combination of magnetically absorptive material and noise-inhibiting material. In another embodiment, ear covering 402 is sized to fit inside the wearer's pinnae. Magnetically absorptive ear covering 402 is preferably made from silicone rubber with ferrite particles dispersed in it, such as ECCOSORB.

A method 500 of protecting a hearing aid from magnetic fields generated by a wireless communications device is also provided by the invention. In a step 501, a magnetically absorptive material is placed between the base of an antenna of the wireless communications device and the hearing aid.

A method 600 provides a wireless communications device with low magnetic field emission. In a step 601, a magnetically absorptive material is placed within a distance from the base of the antenna of one wavelength, excluding a 10° half cone whose vertex is at the base of the antenna and that includes the antenna, where the wavelength is defined by a nominal frequency of the antenna.

The wireless communications device need not be a cellular telephone; the invention encompasses other devices such as mobile telephones, wireless telephones, cordless telephones, and any device for use with licensed and unlicensed personal communications services. Other materials for the sleeve, and other means for attachment of the magnetically absorptive material to the defined region are provided for.

The magnetically absorptive material need not be one specifically disclosed; other materials with suitable permeability and impedance characteristics can be used. All types of hearing aids subject to interference with wireless communications devices are within the scope of the invention. The invention also encompasses suppressing interference in electrical devices other than hearing aids, and attenuation of magnetic fields caused by devices other than wireless communications devices.

Although a handset was used as an example, the invention is applicable to other configurations, as for example, a telephone headset. Certain materials are herein called "magnetically absorptive"; the term refers to attenuation that occurs as a wave passes through a medium, and is not a limitation of mechanism. The term herein encompasses both a redirection of a magnetic field and a disruption or disintegration of a magnetic field as it passes through a medium. These and other modifications to and variations on the preferred embodiments are provided by the present invention, the scope of which is limited only by the following claims.

## Claims

1. A device for suppressing EMF interference with a hearing aid, comprising:

    an earcup incorporating magnetically absorptive material.

2. The device of Claim 1 wherein said magnetically absorptive material is flexible.

3. The device of Claim 2 wherein the magnetically absorptive, flexible material is silicone based.

4. The device of Claim 1 wherein the magnetically absorptive material includes a metal oxide where the metal is selected from the group consisting of iron, manganese, cobalt, zinc, copper, magnesium, and nickel.

5. A wireless communications device including:

    an antenna, said antenna having a base and emitting an electromagnetic signal at a nominal frequency; and

a magnetically absorptive material disposed within a distance from the base of the antenna of one wavelength of the nominal frequency, excluding a 10° half cone whose vertex is at the base of the antenna and that includes the antenna.

6. The device of Claim 5 further including a handset, wherein the antenna is disposed on the handset.

7. The device of Claim 5 wherein the magnetically absorptive material is flexible.

8. A wireless communications device including:

an antenna, said antenna having a base and emitting an electromagnetic signal at a nominal frequency, the antenna further defining a plane perpendicular to the antenna and through the base of the antenna; and
a magnetically absorptive material disposed on the opposite side of the plane from the antenna within a distance from the base of the antenna of one wavelength of the nominal frequency.

9. A wireless communications device comprising:

a handset including a shell, wherein magnetically absorptive material is disposed on said shell of said handset.

10. The device of Claim 9 wherein said magnetically absorptive material is flexible.

11. A wireless communications device comprising:

a handset including a shell, wherein magnetically absorptive material is disposed inside said shell of said handset.

12. A wireless communications device comprising:

a handset including a shell, said shell defining an earpiece including an earcup for placement against an ear of a user, wherein magnetically absorptive material is incorporated into said earcup of said shell of said handset.

13. The device of Claim 12 wherein the ear piece including the earcup incorporating the magnetically absorptive material is removable, said device further comprising:

an accessory ear piece with an accessory earcup, said accessory ear piece replacing said removable ear piece on said handset when said removable ear piece is removed.

14. A sleeve for encasing a handset of a wireless communications device, said sleeve including a magnetically absorptive material.

15. The sleeve of Claim 14 wherein the magnetically absorptive material is localized in the sleeve to be positioned over an earcup of the handset when the sleeve is in place.

16. The sleeve of Claim 14 wherein said magnetically absorptive material is flexible.

17. The sleeve of Claim 14 wherein said magnetically absorptive material is silicone-based.

18. A method of providing a wireless communications device with low magnetic field emission, said device including an antenna having a base, said antenna emitting an electromagnetic signal at a nominal frequency, said method comprising the step of:

placing a magnetically absorptive material within a distance from the base of the antenna of one wavelength of the nominal frequency, excluding a 10° half cone whose vertex is at the base of the antenna and that includes the antenna.

19. The method of Claim 18 wherein the magnetically absorptive material is incorporated into an earcup of a handset of said wireless communications device.

20. The method of Claim 18 wherein said magnetically absorptive material is placed on a handset of said wireless communications device.

21. The method of Claim 18 wherein the magnetically absorptive material is included in a torus.

22. A method of suppressing interference generated in a hearing aid by a wireless communications device, said device emitting an electromagnetic signal at a nominal frequency, said method comprising the step of:

placing a magnetically absorptive material between the device and the hearing aid.

23. The method of Claim 22 wherein the magnetically absorptive material is placed between the antenna of the wireless communications device and the hearing aid.

24. The method of Claim 22 wherein said magnetically absorptive material is placed within a distance of one wavelength of the nominal frequency from said wireless communications device.

25. A method of protecting a human head from electromagnetic fields emitted from a wireless communications device including a handset having a shell and an antenna, said method comprising the step of:

    placing a magnetically absorptive material between said wireless communications device and said human head.

26. The method of Claim 25 wherein said magnetically absorptive material is placed between said antenna and said human head.

27. The method of Claim 25 wherein said magnetically absorptive material is placed on the shell of the handset.

28. The method of Claim 25 wherein said magnetically absorptive material is incorporated into the shell of the handset.

29. The method of Claim 25 wherein said magnetically absorptive material is disposed within one wavelength of a nominal frequency of the antenna, excluding a 10° half cone whose vertex is at the base of the antenna and that includes the antenna.

FIG. 1B

FIG. 1A

FIG. 1C

FIG. 2

132

204

214

216

210

212

218

202

206

EP 0 805 562 A2

FIG. 3

FIG. 4

EP 0 805 562 A2